# EUROPEAN PATENT SPECIFICATION

(11) **EP 1 539 369 B1**
(45) Date of publication and mention of the grant of the patent: **14.02.2007**
(21) Application number: 03764481.2
(22) Date of filing: 11.07.2003
(51) Int. Cl.: B05B 15/04, B29C 59/02

(54) **MASKING STRIP**
ABDECKBAND
BOURRELET DE MASQUAGE

(30) Priority: 13.07.2002 GB 0216373
(43) Date of publication of application: 15.06.2005
(73) Proprietor: 3M Innovative Properties Company, St. Paul, MN 55133-3427 (US)
(72) Inventor: BOUIC, Phillip J.,, Saint Paul, MN 55133-3427 (US)
(74) Representative: Wightman, David Alexander
(86) International application number: PCT/US2003/021675
(87) International publication number: WO 2004/007087

(56) References cited:
- EP-A- 0 967 019
- WO-A-99/12654

## Description

This invention concerns improvements in or relating to masking materials. The invention has particular, but not exclusive, application to articles for use as masking materials when painting a vehicle.

More especially, the invention is concerned with articles, especially foam articles, for masking a gap between two parts of a vehicle to prevent paint passing through the gap when the vehicle is being spray painted.

It is already known to use masking materials in the form of an elongate foam strip to fill temporarily the gap between a movable part of the vehicle such as a door, hood, trunk and an adjacent part of the vehicle to prevent paint passing through the gap.

Typically, the foam strip is releasably secured in position by a longitudinally extending stripe of pressure sensitive adhesive. In this way, the foam strip can be arranged to extend across the gap and contact surfaces of both parts of the vehicle to block the gap prior to painting and can be removed after painting.

Available foam strips are usually designed according to the size and shape of the gap to be masked. This ensures adequate sealing contact is achieved with the surfaces of both parts of the vehicle to prevent paint passing through the gap while allowing a soft edge to be formed between painted and masked surfaces. In this way, the painted surface blends smoothly into the masked surface when the foam strip is removed and it is not readily apparent that re-painting has taken place, for example after a repair.

Problems can arise, however, if the foam strip employed is too small or too big for the gap to be masked. For example, if the foam strip is too small, masking may be incomplete allowing paint to penetrate through the gap, As a result, an uneven finish may be obtained requiring re-painting. In addition, extensive and costly corrective work may be required to remove paint applied to any surface in error.

On the other hand, if the foam strip is too large, the resulting compression of the foam may produce tight contact with the adjacent unmasked surface. This may cause paint bridging between the unmasked surface and the foam strip that gives rise to a fuzzy edge and foam tearing when the foam strip is removed.

Alternatively or additionally, over-compression of the foam strip may cause the foam to be displaced from its optimum position. For example, the foam strip may be rotated about the adhesive stripe so as to expose the adhesive leading to formation of a hard edge between the painted and masked surfaces. The formation of fuzzy and/or hard edges with foam tearing when the foam strip is removed is undesirable and can require re-painting to obtain an acceptable finish.

The size and shape of gaps can vary according to the part of the vehicle to be masked and can also vary between vehicles. As a result, a large number of foam strips of different size and shape must be stocked to have available an appropriate foam strip for all possible gaps to be masked. This adds considerably to repair costs. In addition, problems can arise if the wrong foam strip is used or if the appropriate foam strip is not available.

EP-A-0967019 discloses a sealing strip according to the preamble of claim 1 having a sealing portion for sealing the gap between a body panel and an adjacent component and an attachment portion extending from the sealing portion and provided with adhesive for attaching the sealing strip to a rear side of the body panel.

WO-A-99/12654 discloses a masking foam tape for sealing the gap between a door and door surround. The tape has an elongate substantially rectangular section provided with adhesive at one end for attaching the tape to a surface and is tapered and free of adhesive at the other end.

There is a need for an article which can be used as a masking material for masking gaps of varying size and shape when spray painting a vehicle.

Thus, embodiments of the invention provide an article suitable for use as a masking material in a range of locations.

In preferred application, embodiments of the invention provide an article in the form of an elongate strip for masking a gap between two parts of a vehicle to form a soft edge between adjacent masked and unmasked areas when painting the vehicle.

At least some embodiments of the invention provide an article in the form of an elongate strip for soft edge masking in gaps of different size and/or shape

In a preferred embodiment the invention provides an article in the form of an elongate strip for masking a gap that can be re-used.

Some embodiments of the invention provide an article for use as a masking material in the form of an elongate foam strip.

According to a first aspect of the invention there is provided an article for use as a masking material to mask a gap between two relatively movable parts as defined in claim 1.

By this invention, the strip can adapt to fill gaps of different size and/or shape by hinging movement of the edge forming portions to contact the two relatively movable parts defining the gap to be masked.

Furthermore, the hinging movement enables the edge forming portions to move independently so that the position of one edge forming portion can change to adapt the strip to the size and shape of the gap to be masked without causing movement of the other edge forming portion.

In this way, the edges formed between masked and unmasked surfaces when painting are largely unaffected by changes in the relative position of the edge forming portions to adapt the strip to the size and/or shape of the gap.

As a result, the invented article may be used when painting a vehicle to fill temporarily the gap between two relatively movable parts of the vehicle in a variety of different locations where previously a range of articles having profiles specially designed to the size and shape of each gap may have been required.

Preferably, the article is made of a polymer material by any suitable method, for example extrusion, laminating, casting, moulding, thermoforming, coiling as well as any suitable forming techniques for shaping and/or cutting, for example with shaping dies and/or cutting blades or a combination of any of these. The edge forming portions may be of solid transverse cross-section. Alternatively, one or both edge forming portions may be of hollow transverse cross-section.

The polymer material may be compressible, for example an open or closed cell polymeric foam that is resiliently compressible. In this way, conformation of the elongate strip to gaps of different sizes and shapes is assisted. Foams having a density in the range of from 20 to 30 Kg.m³ are typically found to be suitable and include polyurethane, polyolefin, polyester or like foam materials. Other polymer materials that can be used in place of foams include elastomers, thermoplastics and non-woven materials. Alternatively, a combination of two or more polymer materials may be used.

In some embodiments the polymer material is shaped by applying pressure to compress and fuse the cells together. The shaping process may result in complete or partial compression and fusing of the cells together. The shaping process may result in the compression and fusing of the cells being permanent so as to retain and maintain the desired shape of the article.

Depending on the material of the article and the pressure applied, the deformation of the material may be sufficient to cause the material to retain the desired shape without any additional energy input during the shaping process. In some case, however, the shaping process may be enhanced by providing an additional input of energy to assist in retaining the desired shape of the article when the pressure is removed. This may be achieved in a variety of ways. For example by increasing the pressure applied to deform the material, or by the application of heat to the material or by other means such as electromagnetic radiation or ultrasonics.

The edge forming portions may be of the same or different transverse cross-section and the connecting web portion may be of reduced thickness relative to at least one and more preferably both edge forming portions.

Preferably, one of the edge forming portions is of larger transverse cross-section than the other edge forming portion and the web portion is of reduced thickness relative to both edge forming portions.

In one arrangement, the edge forming portions are of elliptical transverse cross-section with the web portion located on the major axis of both edge forming portions. In another arrangement, the web portion is tangential to both edge forming portions. In yet another arrangement, the web portion is located on the major axis of one edge forming portion and is tangential to the other edge forming portion.

One of the edge forming portions may be connected to a further edge forming portion by another web portion. In this way, the masking material can be used more than once by employing this edge forming portion separately with each of the other edge forming portions to which it is connected.

The web portion may be of uniform or variable thickness across its width and may have a smooth or patterned surface to relieve stress and/or provide the web portion with desired physical properties for a given application. For example, the web portion may have a ribbed surface with the ribs extending longitudinally or transversely of the foam strip. In this way, the stiffness, strength or flexibility of the web portion in a particular plane or direction can be modified as desired.

Advantageously, the adhesive is a pressure sensitive adhesive by means of which the web portion can be secured releasably to one of the relatively movable parts. The adhesive may extend fully or partially across the width of the web portion and may be continuous or discontinuous in the longitudinal direction. For example the adhesive may be applied as an adhesive stripe extending lengthwise of the strip.

A single adhesive stripe may be applied to the web portion and to at least one edge forming portion. Alternatively, the web portion and at least one edge forming portion may be provided with separate adhesive stripes.

Advantageously, the adhesive free surface of the edge forming portion that contacts the part to which the web portion is adhesively secured is provided by an adhesive free region extending lengthwise of the elongate strip to one side of the adhesive stripe. The adhesive free region preferably has a transverse width of at least 2mm in the unattached condition of the article. In this way, contact between the adhesive free surface and the part to which the strip is attached is maintained to prevent exposure of the adhesive stripe.

The edge forming portion that contacts the other part may have an adhesive free surface or may be adhesively secured to the other part.

According to a second aspect of the invention, there is provided a method of making a masking material comprising providing a sheet of polymer material, applying pressure to the polymer sheet at first and second laterally spaced positions to form first and second longitudinally extending seams between upper and lower surfaces of the polymer sheet, and applying pressure to the polymer sheet to compress partially a portion of the polymer sheet between the first and second seams to form a flexible web portion of reduced thickness relative to the remaining portion of the polymer sheet between the first and second seams.

Preferably, the polymer sheet is separable along the seams to form an elongate strip in which the flexible web portion connects first and second edge forming portions.

Advantageously, the method includes applying an adhesive to the web portion between the first and second seams for releasably securing the elongate strip to mask temporarily a gap between two relatively movable parts.

Preferably, the adhesive is applied as a longitudinal stripe to the flexible web portion whereby the strip can be anchored firmly between the first and second edge forming portions.

The sheet may comprise a plurality of elongate strips releasably secured together along adjoining side edges by separable longitudinal seams.

Advantageously, the method includes applying a surface pattern to the web portion on at least one side to modify the physical properties of the web portion. For example the surface pattern may comprise a series of ribs to relieve stress and/or alter the stiffness, strength or flexibility of the web portion.

Other methods of forming the masking materials embodying this invention include extrusion, laminating, casting, moulding, thermoforming, coiling as well as any suitable forming techniques for shaping and/or cutting, for example with shaping dies and/or cutting blades.

According to a third aspect of the invention, there is provided apparatus for manufacturing a masking material comprising means for forming first and second seams between upper and lower surfaces of a sheet of polymer material, said seams being laterally spaced apart, and means for partially compressing a portion of said polymer sheet between the seams to form a flexible web portion of reduced thickness, wherein said polymer sheet is separable along said seams to form an elongate strip having said flexible web portion joined along at least one edge to a portion of increased thickness. ,

Preferably, a plurality of strips are formed side-by-side across the polymer sheet and releasably joined together by longitudinal seams. An array of strips may be coiled and supplied for separation of a desired length of strip by the end user.

Advantageously, the apparatus includes means for applying adhesive to the strip. For example, a coating die for applying a longitudinal stripe of adhesive to a selected region of the strip, preferably the flexible web portion.

These and other features, benefits and advantages of the invention will be more fully understood from the description hereinafter of exemplary embodiments of articles that can be used as masking materials and methods and apparatus for making such articles.
**Figure 1** shows a gap between a vehicle door and pillar requiring masking when spray painting the vehicle;
**Figure 2** shows diagrammatically the location of a known masking material in the gap;
**Figure 3** shows diagrammatically the effect of over compression of the masking material shown in Figure 3;
**Figure 4** shows a diagrammatic cross-section of a foam article for use as a masking material according to a first embodiment of the invention;
**Figure 5** shows the foam article of Figure 4 masking the gap between the vehicle door and pillar shown in Figure 1;
**Figure 6** shows a method and apparatus for making the foam article shown in Figure 4;
**Figures 7 to 9** show alternative patterned contact surfaces for applying surface patterns to the connecting web of the foam article shown in Figure 4 using the method and apparatus of Figure 6;
**Figure 10** shows an adhesive delivery system for use with the method and apparatus of Figure 6;
**Figures 11 to 15** show alternative positioning for adhesive stripe(s) on the foam article of Figure 4;
**Figures 16 and 17** show modifications to the relative dimensions of the edge forming portions of the foam article shown in Figure 4;
**Figures 18 and 19** show modifications to the position of the connecting web in the foam article of Figure 4;
**Figures 20 to 23** show modifications to the size and/or shape of the connecting web in the foam article of Figure 4;
**Figure 24** shows a diagrammatic cross-section of a foam article for use as a masking material according to a second embodiment of the invention;
**Figure 25** shows a method and apparatus for making the foam article shown in Figure 24;
**Figure 26** shows a modification to the foam article of Figure 24;
**Figures 27 to 30** show diagrammatic cross-sections of alternative masking materials according to the first embodiment of the invention;
**Figures 31 to 34** show diagrammatic cross-sections of alternative masking materials according to the second embodiment of the invention;
**Figure 35** shows the masking material of Figure 27 masking the gap between the door and door post of Figure 1;
**Figure 36** shows a method of making the masking material shown in Figure 29; and
**Figures 37 to 41** show an alternative method and apparatus for making masking material embodying the invention.

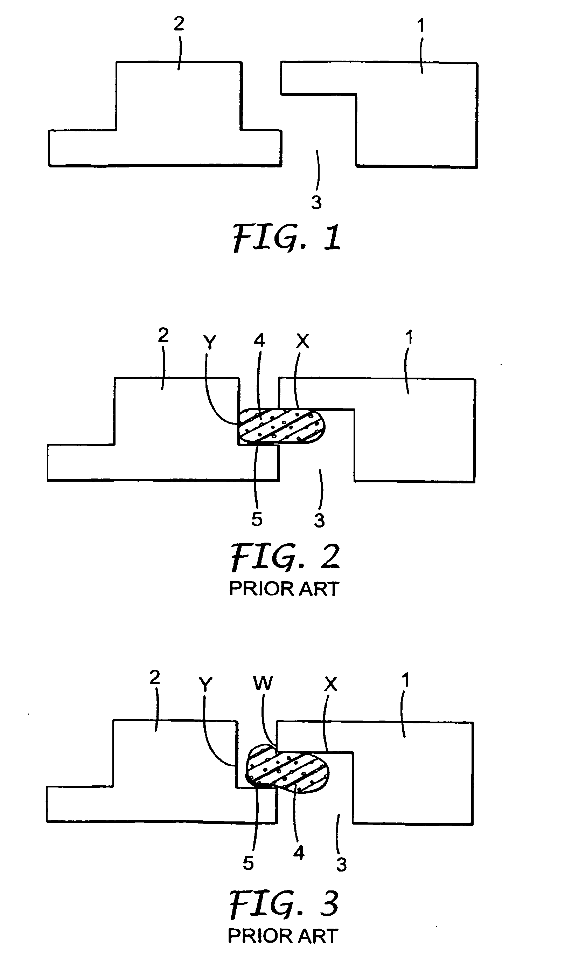

Referring first to Figure 1 of the drawings, there is shown a vehicle door 1 and a pillar or post 2 defining a gap 3 in the closed position of the door 1.

The gap 3 extends between the outside and the inside of the vehicle so that temporary masking of the gap is required to prevent paint passing through the gap 3 when spray painting the outside of the vehicle, for example following a repair to match the paintwork of the repair to the rest of the vehicle.

With reference now to Figure 2, a typical masking material for masking the gap 3 is shown and comprises an elongate foam strip 4 of elliptical cross-section secured to the base face of the post 2 by a longitudinal adhesive stripe 5. The inside face of the edge of the door 1 closes against the foam strip 4 and compresses the foam strip 4 to seal the gap 3 and prevent paint passing through the gap 3 when spray painting the outside of the vehicle.

The foam strip 4 contacts the side face of the post 2 at point Y and the inside face of the door 1 at point X. In this way, the foam strip 4 forms soft edges between painted and masked surfaces of the post 2 and door 1.

As will be appreciated, if the foam strip 4 is too small, the gap 3 is not properly sealed and paint may penetrate to the inside of the door 1 resulting in the need for corrective work to be carried out to remove paint from any contaminated surfaces.

On the other hand, if the foam strip 4 is too large, the resulting compression of the foam strip 4 when the door is closed may cause problems. For example, as shown in Figure 3, the foam strip 4 may rotate about the adhesive stripe 5 so as to lift away from the side face of the post 2 and expose the adhesive stripe 5. This causes formation of a hard edge at the interface between the side face of the post and the exposed adhesive stripe 5 necessitating corrective work to be carried out when the foam strip 4 is removed.

Alternatively or additionally, compression of the foam strip 4 may result in tight contact between the foam strip 4 and inside face of the door 1 leading to paint bridging at point W. This causes formation of a fuzzy edge and foam tearing when the foam strip 4 is removed that again requires corrective work to be carried out.

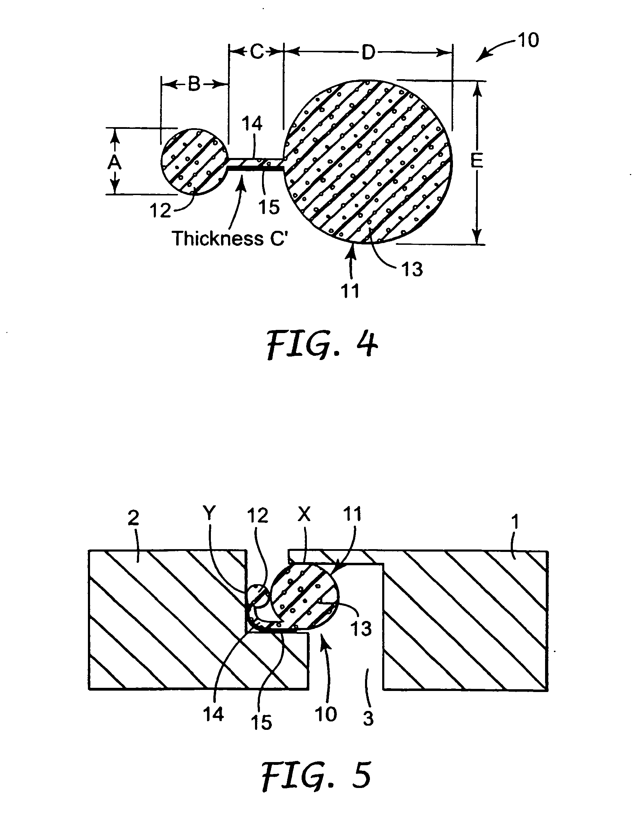

Referring now to Figure 4, there is shown a foam article 10 according to a first embodiment of the invention for use as a masking material between two parts of a vehicle when the vehicle is spray painted.

The foam article 10 comprises an elongate foam strip 11 having two lobes 12, 13 of elliptical cross-section connected by an integral web 14. Each lobe 12, 13 has a major axis transverse to the length of the foam strip 11 and the connecting web 14 is aligned with the major axis of each lobe 12, 13. In this embodiment the lobes 12, 13 are of different cross-section and the thickness of the web 14 transverse to the length of the foam strip 11 is less than the thickness of both lobes 12, 13 transverse to the length of the foam strip 11.

Suitable dimensions for the foam article 10 are given in Table 1 for masking gaps of varying size and shape commonly found in automotive vehicles, especially cars, in different locations, for example between a front or rear door, or hood or trunk or tailgate and the adjacent vehicle body.

**Table 1**

| A (Thickness) | B (Width) | C (Width) | C' (Thickness) | D (Width) | E (Thickness) |
|---|---|---|---|---|---|
| 4.5mm | 4.5mm | 3.5mm | 1mm | 13.5mm | 12mm |

It will be understood these dimensions are given by way of non-limiting example only and any dimension may be altered according to the particular requirement for any given application of the foam strip 11.

The foam strip 11 may be made from any suitable polymeric foam material. Preferred foam materials are polyurethanes or polyolefins but it will be appreciated that other foam materials may be used as will be familiar to those skilled in the art. In this embodiment, the foam strip 11 is a polyester or polyurethane foam. A suitable foam is available from Caligen Foam Limited under the trade designation "X4200AM" although it will be understood that other foam materials may be used.

The foam strip 11 is provided with a longitudinally extending adhesive stripe 15 on one side of the web 14 by means of which the foam strip 11 can be releasably secured in position. The adhesive stripe 15 may be a pressure sensitive adhesive such as a hot melt rubber adhesive applied by any suitable means, for example die coating.

In this embodiment, the adhesive stripe 15 is applied across the full width of the web 14 but it will be appreciated that this is not essential and the adhesive stripe 15 may be applied across part of the width of the web 14. The adhesive stripe 15 may also be continuous or discontinuous in the longitudinal direction provided that the foam strip 11 is effectively anchored in position to permit the lobes 12,13 to move independently without motion of one lobe causing motion of the other lobe.

Referring now to Figure 5, the foam article 10 of Figure 4 is shown masking the gap 3 between the door 1 and post 2 shown in Figure 1. The foam strip 11 is secured to the base face of the post 2 by means of the adhesive stripe 15 so that an adhesive free surface of the smaller lobe 12 contacts the side face of the post 2 at point Y.

The larger lobe 13 is folded upwards by contact with the base face of the post 2 so that an adhesive free surface of the lobe 13 contacts the inside face of the door 1 at point X when the door 1 is closed. In this way, the gap 3 is closed to prevent paint passing through the gap 3 when the vehicle is spray painted.

As will be understood, the web 14 permits the lobes 12, 13 to move independently of each other so that forces applied to the lobe 13 by the door 1 are not transferred to the lobe 12. In this way, the adhesive free contact between the lobe 12 and the side face of the post 2 is unaffected by compression of the lobe 13 and the adhesive stripe 15 is concealed preventing formation of a hard edge when the vehicle is spray painted.

Furthermore, the foam strip 11 can adapt to close gaps 3 of different size and/or shape by hinging movement of the lobe 13 about the web 14 and this movement does not cause the position of the lobe 12 to change.

Accordingly, there is no tendency for the lobe 12 to lift off the side face of the post 2 to expose the adhesive stripe 15 when the door 1 is closed. In this way, a soft edge is formed at the interface between the unmasked surface of the post 2 and the adhesive free surface extending lengthwise of the strip where the edge of the lobe 12 contacts the side face of the post 2 at point Y. A soft edge is also formed at the interface between the unmasked surface of the door 1 and the adhesive free surface extending lengthwise of the strip where the edge of the lobe 13 contacts the inner face of the door 1 at point X.

As will be understood, the function of filling the gap 3 to prevent paint passing through the gap 3 is performed by engagement of the lobes 12 and 13 with faces of the post 2 and door 1 respectively. Moreover, the foam strip 11 can adapt to fill gaps 3 of different size and shape independently of the edge forming function performed by each lobe 12, 13 where it contacts the face of the post 2 and door 1. As a result, soft edges can be formed between painted and masked areas on both the post 2 and door 1.

In this embodiment, the lobe 12 provides an adhesive free region that extends lengthwise of the strip on one side of the adhesive stripe 15 and has a transverse width of 6mm (Table 1). We have found that the adhesive free region can be of narrower width without exposing the adhesive stripe 15 and, in general, a width of 2mm may be sufficient to maintain contact between an adhesive free surface of the lobe 12 and the part to which the strip is anchored by the adhesive strip

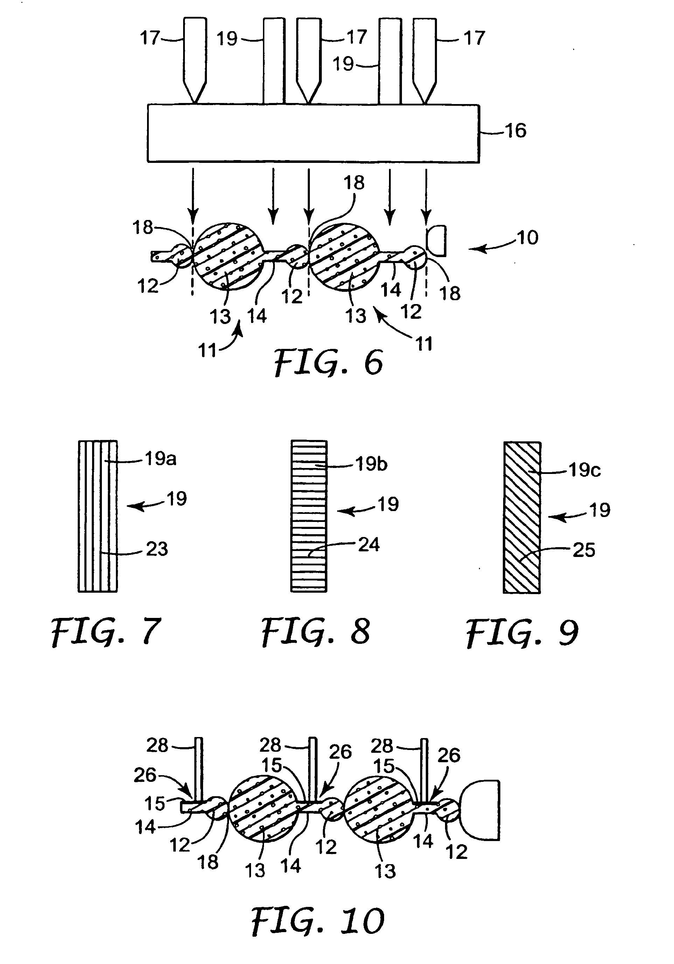

Referring now to Figure 6, a method and apparatus for forming the foam article 10 of Figure 4 is shown starting from a flat sheet 16 of foam.

The foam sheet 16 is provided with a plurality of uniformly spaced, parallel, seams 18 extending longitudinally of the foam sheet 16 by the application of pressure via a plurality of laterally spaced blades. The blades 17 have blunt ends approximately 0.5 mm wide that compress the foam so that the upper and lower surfaces fuse together along the seams 18 and prevent the foam returning to its original shape on removal of the pressure.

The foam sheet 16 is also compressed between the seams 18 to form the webs 14 by the application of pressure via a plurality of flat blades 19. One blade 19 is provided between each pair of blades 17 and is offset towards one of the blades 17.

The ends of the blades 19 are wider than the blades 17 and they only partially compress and fuse a portion of the foam sheet 16 between the seams 18 so that the foam material is prevented from returning to its original shape on removal of the pressure.

In this way, the desired shape of the foam article 10 having two elliptical lobes 12, 13 of different transverse cross-section connected by the flat web 14 is produced. The foam sheet 16 is separable along the seams 18 to form individual foam strips 11.

The foam strips 11 can be stored and supplied in rolls of pre-determined length wound on itself or a core (not shown) from which the end user can unwind and separate a required length.

More than one foam strip 11 may be wound on a common core either separately or joined together by the seams 18 and manually separated by the end user when unwinding a desired length of the foam strip 11.

As will be appreciated, the relative size of the lobes 12, 13 is determined by the offset of the flat blades 19 between the blades 17 and can be varied to provide any desired shape of foam article 10. The spacing of the lobes 12, 13 can also be altered by changing the width of the flat blades 19.

In the above method, the foam sheet 16 is compressed by the blades 17, 19 while the foam sheet 16 is stationary and the foam sheet 16 is formed to the required shape in a series of steps by advancing the sheet 16 between forming operations to present a new area of the sheet 16 to be shaped. In another method (not shown), the blades 17, 19 are replaced by rotatable discs and the foam sheet 16 is formed to the required shape in a continuous manner by feeding the sheet 16 past the discs.

The blades 19 may have a smooth or patterned contact surface (Figures 7 to 9) to provide the connecting web 14 with a smooth or patterned surface to relieve stress and impart any desired physical properties to the connecting web 14. By relieving stress, spiralling of the foam strip 11 is reduced both when coiling the strip 11 for supply to the end user and when separating a length of strip 11 from the coil for use. In this way, securing of the strip 11 by the adhesive stripe 15 to one of the parts is facilitated.

Figure 7 shows a blade 19 having a contact surface 19a with an array of notches 23 that form a plurality of parallel ribs extending in the longitudinal direction of the foam strip 11 that increase bending of the web 14 in this direction.

Figure 8 shows a blade 19 having a contact surface 19b with an array of notches 24 that form a plurality of parallel ribs extending transversely to the longitudinal direction of the foam strip 11 that increase stiffness of the web 14 against bending in this direction.

Figure 9 shows a blade 19 having a contact surface 19c with an array of notches 25 that form a plurality of parallel ribs extending at an angle of less than 90° to the longitudinal direction of the foam strip 11 that combine to a lesser extent the bending and stiffness properties of the webs 14 of Figures 7 and 8.

These surface patterns are provided by way of example only and it will be readily understood that other surface patterns could be employed to provide the connecting web 14 with any desired properties of stress relief, stiffness, strength or flexibility in a particular plane or direction.

The stripe 15 of pressure sensitive adhesive can be applied to the web 14 before or after separating the foam strips 11 along the seams 18 by any suitable adhesive delivery system.

One adhesive delivery system is shown diagrammatically in Figure 10 and comprises a plurality of separate, individual dies 26 positioned above the connecting webs 14 of the foam strips 11. The dies 26 are supplied with adhesive from a remote source (not shown) via separate flow channels 28 and apply the adhesive stripes 15 to the connecting webs 14 of the foam strips 11.

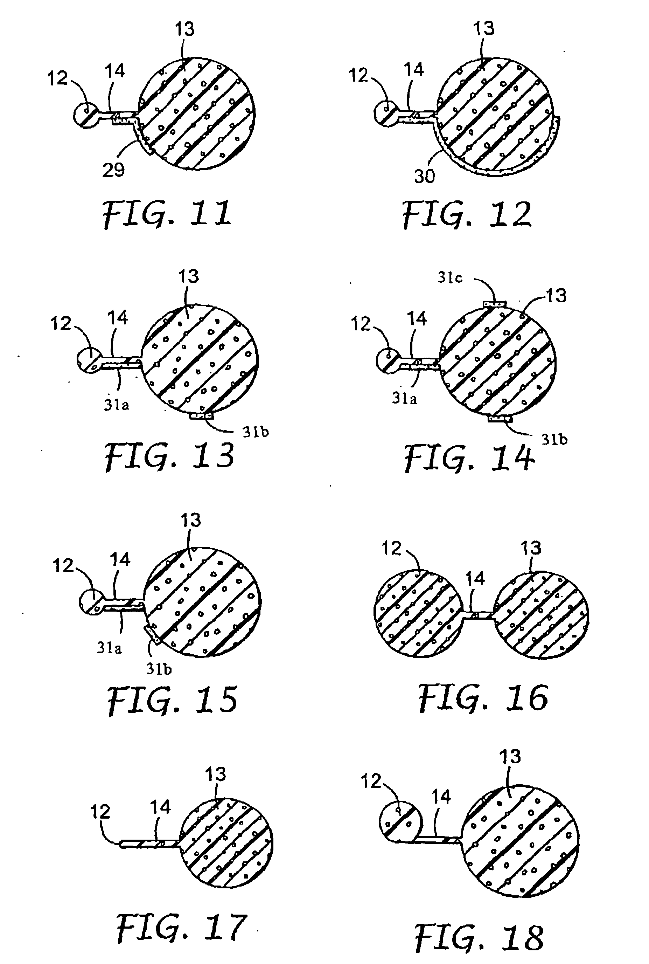

It will be understood that the invention is not limited to the embodiment above-described and that various modifications can be made to the foam strip 11. Some of these modifications are now described with reference to Figures 11 to 23 in which like reference numerals are used where appropriate to indicate corresponding parts.

Thus, the adhesive used to secure releasably the foam strip 11 can be applied to different regions of the foam strip 11. In Figures 11 and 12, a single adhesive stripe 29, 30 of different width is provided on both the web 14 and larger lobe 13. In Figures 13 to 15, separate adhesive stripes 31a, 31b, 31c are provided on the web 14 and larger lobe 13. Other variations that can be employed will be apparent to those skilled in the art. It will be understood that shape and/or position of the adhesive coating dies 26 can be altered to adapt the adhesive delivery system to apply the adhesive stripe(s) at any desired location.

The relative size of the lobes 12,13 may be varied by changing the position of the flat blade 19 between the blades 17. For example, the relative size of the lobes 12, 13 may vary from 1:1 (Figure 16) to 0:1 in which the smaller lobe is effectively the size of the web 14 (Figure 17). The spacing of the lobes 12, 13 may also be varied by altering the width of the web 14.

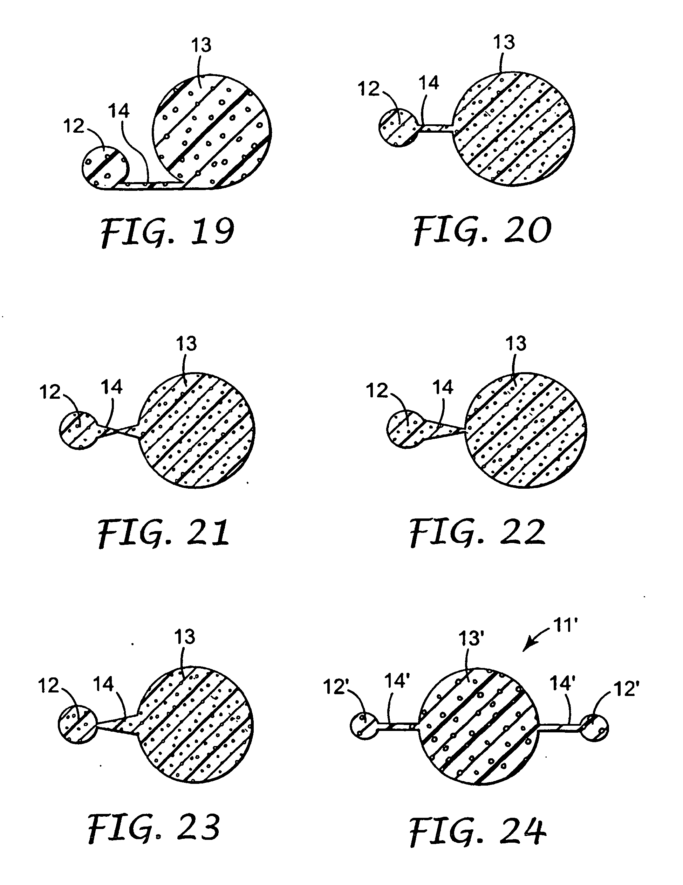

The position of the web 14 connecting the lobes 12,13 may be altered from being on the major axis of both lobes 12, 13 to being tangential to one lobe and on the major axis of the other lobe (Figure 18) or tangential to both lobes (Figure 19).

The connecting web 14 may be of any thickness provided it is thinner than at least one of the lobes 12, 13 and may be of uniform thickness (Figure 20) or variable thickness (Figures 21,22,23) across its width. The variable thickness provides enhanced flexibility for independent hinging movement of the lobes 12,13 and may be produced by appropriate angling of the contact face of the blades 19 shown in Figure 6.

Referring now to Figure 24, there is shown a further modification of the foam strip 11 above-described. In this embodiment, the foam strip 11' is provided with two smaller lobes 12' connected to a larger lobe 13' by separate connecting webs 14'. As shown, the smaller lobes 12' are arranged symmetrically on opposite sides of the larger lobe 13'. This is not essential, however, and the smaller lobes 12' may extend at an angle of less than 180° to each other.

In use, the foam strip 11' may be used to seal a gap between a vehicle door and a door post by securing the foam strip 11' to provide soft edges with one of the small lobes 12' and the large lobe 13' as described previously. The other small lobe 12' is positioned in the gap behind the large lobe 13' and is protected from contact with paint when the vehicle is sprayed.

As a result, the foam strip 11' can be removed and re-attached using the small lobe 12' that was previously protected and the other side of the large lobe 13' to present unpainted surfaces to form soft edges with the door and door post. In this way, the foam strip 11' can be re-used to provide two masking applications from one length of foam strip 11'.

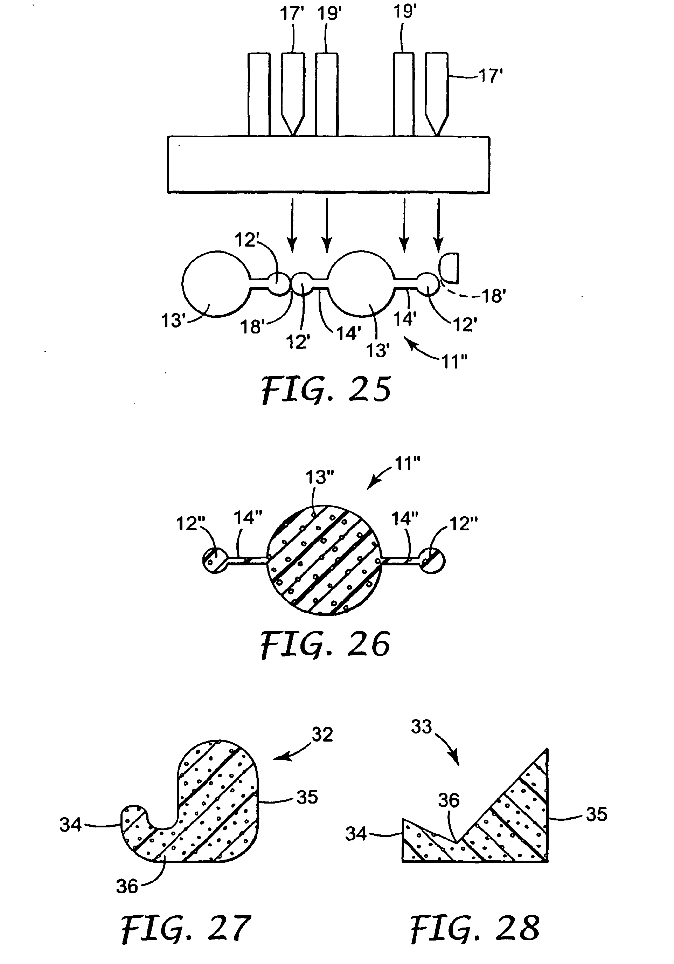

This foam strip 11' may be produced using the same process described above by employing two flat blades 19' between a pair of blades 17' forming separable seams 18' (Figure 25).

The small lobes 12' of the foam strip 11' shown in Figure 24 are of the same cross-section. This is not essential, however, and Figure 26 shows a modification in which the small lobes 12" are of different cross-section.

Although the invention has been described with particular reference to a foam strip in which elliptical lobes are connected by a flexible web permitting relative movement of the lobes independently, it will be understood that this principle can be applied to other shapes and configurations of foam strips.

Figures 27 and 28 show cross-sections of alternative shapes or profiles of foam strip 32,33 having two edge forming portions or lobes 34,35 connected by a flexible hinge portion 36 permitting relative movement of the lobes 34,35 independently of each other.

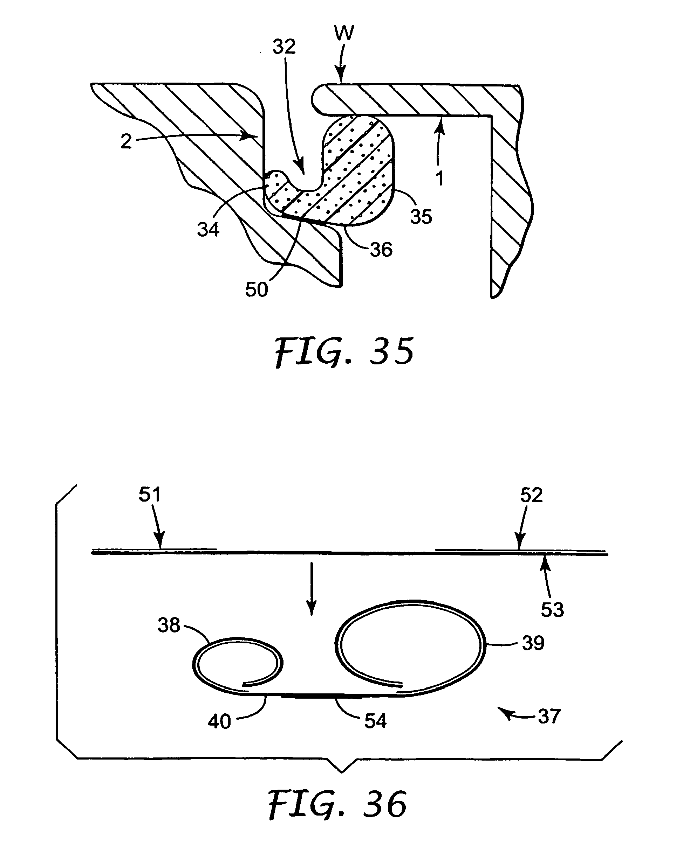

The foam strips 32, 33 can be used to close the gap 3 between the door 1 and door post 2 in similar manner to the foam strip 11. For example, as shown in Figure 35, the foam strip 32 is secured to base face of the door post 2 by an adhesive stripe 50 on the connecting web 36 to position the smaller lobe 34 against the side face of the door post 2.

The larger lobe 35 sits behind the edge of the door 1 and contacts the inner face when the door 1 is closed to form a barrier closing-off the gap 3 to prevent ingress of paint. In this way, the larger lobe 35 does not come into contact with the edge of the door at point W thereby preventing formation of a fuzzy edge.

Also, when the door 1 is closed, the compression of the larger lobe 35 is accommodated by hinging movement of the larger lobe 35 about the connecting web 36 and is not transmitted to the smaller lobe 34. As a result, the smaller lobe 34 does not rotate or tilt and the contact between the adhesive free surface of the smaller lobe 34 and the side face of the post 2 is maintained. In this way, the adhesive stripe 50 is not exposed and a soft edge is produced at the interface between the painted and masked regions of the door post 2.

It will be understood that the invention is not limited to the arrangements shown in Figures 5 and 35 to close the gap 3 between the door 1 and door post 2 with the strips 11 and 32 respectively. Thus, we may adapt the strips 11, 32 to close gaps of different size and/or shape by changing the secured position and/or orientation of the strips 11, 32. For example, we may attach the strips 11, 32 so that the larger lobes 13, 35 respectively contact surfaces on the door post 2 and door 1 to close the gap 3 and conceal the adhesive so that a soft edge is obtained at the interface between the painted and masked regions. Other arrangements will be apparent to and/or may be devised by those skilled in the art according to requirements for a given application. It will also be understood that the invention is not limited to masking materials made entirely of foam and that other materials and/or combinations of materials may be employed.

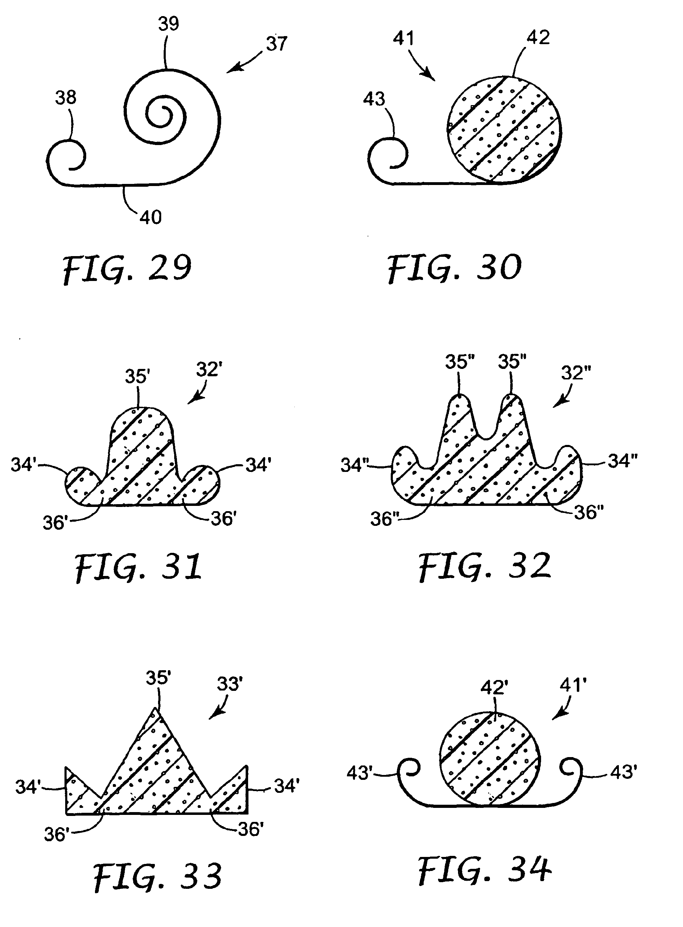

Figure 29 shows a cross-sectional profile of a masking material 37 in the form of a coil of non-woven polymeric material providing two edge forming hollow portions or lobes 38,39 connected by a flexible portion 40. Figure 30 shows a cross-sectional profile of a masking material 41 in the form of a foam cord 42 and a coiled tape 43 laminated together.

One method of making the coiled masking material 37 is shown in Figure 36 and employs surface contraction of laminated material to form the required profile. As shown, two strips 51,52 of sheet material are applied to side edges of a thin sheet 53 of foam, for example a 1mm sheet of polyurethane foam, which has been secured in a stretched, flat condition.

The strips 51,52 are of different width and, on releasing the foam sheet 53, the foam relaxes and attempts to return to its original condition but is prevented from doing so along the edges by the strips 51,52 which cannot relax. As a result, the edge regions curl and form hollow coils of different size as shown due to the different widths of the strips 51,52. Other methods of causing the edges of a foam sheet to curl may be employed and include the use of heat, ultra-violet light, moisture or physical stimulus.

An adhesive stripe 54 may be applied to the centre region by means of which the masking material 37 can be secured to mask the gap between two relatively movable parts of a vehicle. As will be appreciated, the curled edges of the material 37 form lobes that contact the surface of the parts to be masked and are movable independently of each other by hinging movement about the centre region.

The masking materials 32,33,37,41 shown in Figures 27 to 30 are suitable for single use and it will be appreciated that one of more of these materials can be adapted to provide re-usable profiles. Figures 31 and 32 show two alternative re-usable profiles of masking material 32', 32" based on the profile of Figure 27. Figure 33 shows a re-usable profile of masking material 33' based on the profile of Figure 28. Figure 34 shows a re-usable profile of masking material 41' based on the profile of Figure 30. Other profiles of masking materials that can be employed will be apparent to those skilled in the art.

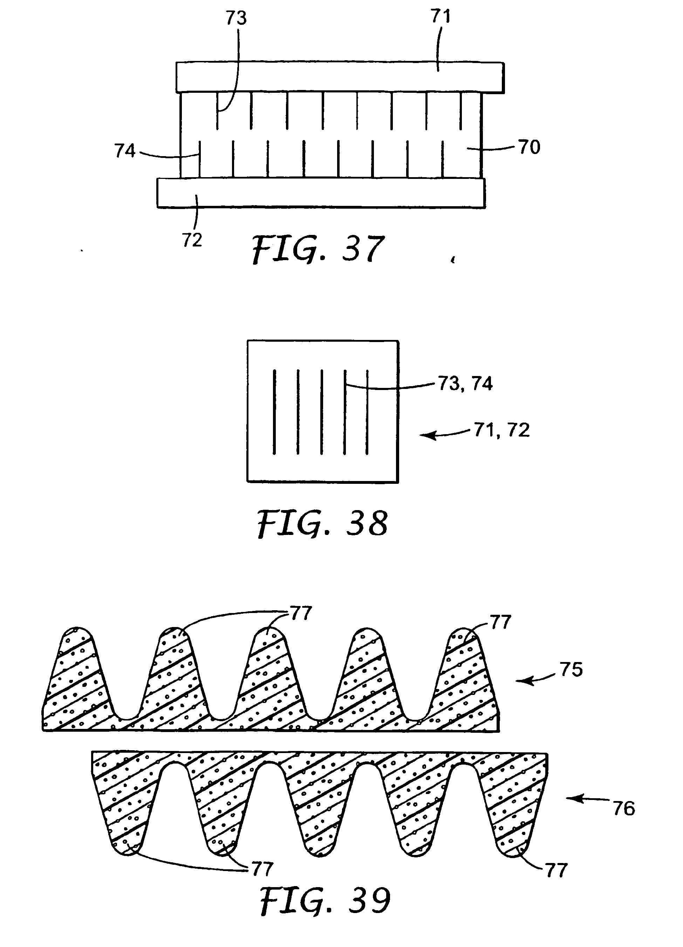

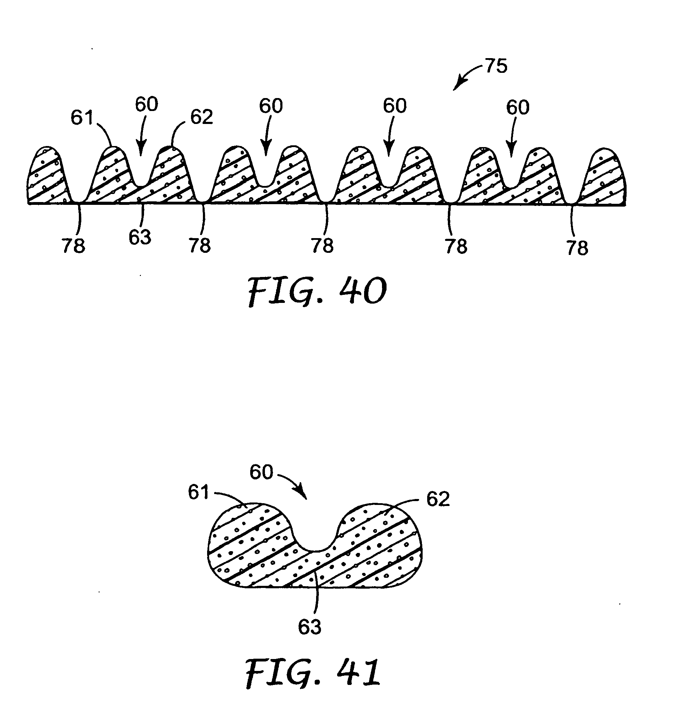

With reference now to Figures 37 to 41, an alternative method and apparatus for producing a foam masking strip 60 (shown in Figure 41) having edge forming regions or lobes 61,62 connected by a web 63 of reduced thickness is shown.

In this method, a block of foam 70 is clamped between two wooden dies 71,72 incorporating sets of parallel, flat plates 73,74 respectively with blunted ends. The dies 71,72 are offset so that the plates 73 of the die 71 are aligned with the gaps between the plates 74 of the die 72 and vice versa (Figure 37). In this way, the foam 70 is forced to adopt a wave-like configuration between the dies.

The ends of the plates 73,74 are also spaced apart to allow a sharp blade (not shown) or similar device to be inserted between the plates 73,74 with a sawing or vibrating motion to separate the foam 70 into two sheets 75,76 (Figure 39). Alternatively, a hot wire system can be employed to cut the foam with appropriate precautions to remove any hazardous fumes.

Each sheet 75,76 comprises a plurality of parallel longitudinal ribs 77 of triangular shape. The sheets 75,76 can then be further processed by compressing the foam through the ribs 77 to produce an array of foam strips 60 joined by separable seams 78 (Figure 40) from which individual foam strips 60 can be separated. Adhesive stripes can be applied to appropriate regions of the foam strips 60 at any suitable point in the process. The relative sizes of the lobes 61,62 can be altered by changing the position at which the ribs 77 are compressed. Other foam shapes can be obtained by compressing the foam sheets 75,76 in other locations and/or by slitting or skip-slitting the foam in selected regions.

In an alternative process (not shown), the dies 71,72 may be replaced by rotating drums with surface ridges at a pre-set spacing to form the wave-like profile and a cutting blade at the foam exit point to slice the shaped foam into two sheets. The separated foam strips can then be converted to foam strips as described above with adhesive stripes applied to selected regions of the foam strips at any suitable point in the process.

As will be apparent from the foregoing description, the present invention provides a masking material for masking across a gap when painting a vehicle in which the edge forming portions are movable independently of each other. As a result, the sealing function is substantially unaffected by movement of either edge forming portion when the masking material is secured in position to close the gap. In this way, the masking material is conformable to close the gap and provide a soft edge between the painted and masked surfaces on both sides of the gap.

It will be understood that the above-described examples are intended to illustrate the diverse range and application of the invented masking materials and that features of the embodiments may be used separately or in combination with any other feature of the same or different embodiments to produce an article that can be used as a masking material.

Moreover, while the specific materials and/or configuration of the articles described and illustrated are believed to represent the best means currently known to the applicant for producing articles having application as masking materials, it will be appreciated that the invention is not limited thereto and that various modifications and improvements can be made within the scope of the claims.

## Claims

1. An article for use as a masking material to mask a gap (3) between two relatively movable parts (1,2) comprising an elongate strip (11;32;33;37) provided with adhesive (15;50:54) for attaching the strip (11;32;33;37) to one of the parts (1,2) **characterised in that** the strip (11;32;33;37) has at least first and second separate edge forming portions (12,13;34,35;38,39) for contacting each of the two parts (1,2), a flexible web portion (14;36;40) connecting the first and second edge forming portions (12,13;34,35;38,39) for hinging movement such that the first and second edge forming portions (12,13;34,35;38,39) can move independently of each other, and with adhesive (15;50;54) on one side of the connecting web portion (14;36;40) for attaching the elongate strip (11;32;33;37) to one of the parts (1,2) such that said one part is contacted by an adhesive free surface of the first edge forming portion (12;34;38) and the other part is contacted by the second edge forming portion (13;35;39).

2. An article according to claim 1 **characterised in that** the strip (11;32) can adapt to fill gaps (3) of different size and/or shape by hinging movement of the first and second edge forming portions (12,13;35,35) to contact the two relatively movable parts (1,2) defining the gap (3) to be masked.

3. An article according to claim 1 or claim 2 **characterised in that** the article is made of foam material.

4. An article according to claim 3 **characterised in that** the foam material is an open or closed cell polymeric foam.

5. An article according to any preceding claim **characterised in that** the connecting web portion (14; 36; 40) is of reduced thickness relative to at least one of the first and second edge forming portions (12,13;34,35;38,39)_

6. An article according to any preceding claim **characterised in that** the second edge forming portion (13';13";35';35";42') is connected to a third edge forming portion (12';12":34';34";43') by a second connecting web portion (14' ; 14" ; 36' ; 36").

7. An article according to claim 6 wherein the second edge forming portion (13'; 13"; 35'; 35"; 42') has a larger transverse cross-section than each of the first and third edge forming portions (12'; 12"; 34'; 34"; 43').

8. An article according to any preceding claim **characterised in that** the connecting web portion (14; 14' 14") has a width transverse to the length of the strip (11; 11'; 11") and is of uniform thickness across the width.

9. An article according to any preceding claim **characterised in that** the connecting web portion has a smooth surface.

10. An article according to any of claims 1 to 8 **characterised in that** the connecting web portion has a patterned surface.

11. An article according to any preceding claim **characterised in that** the adhesive (15) is a pressure sensitive adhesive,

12. An article according to any preceding claim **characterised in that** the connecting web portion (14) has a width transverse to the length of the strip and the adhesive (15) extends across the full width of the connecting web portion (14).

13. An article according to any of claims 1 to 11 **characterised in that** the connecting web portion (14) has a width transverse to the length of the strip (11) and the adhesive (29) extends partially across the width of the connecting web portion (14).

14. An article according to any preceding claim **characterised in that** a single stripe of adhesive (29;30) is applied to the connecting web portion (14) and to at least one edge forming portion (13).

15. An article according to any of claims 1 to 13 **characterised in that** separate adhesive stripes (31a;31b;31c) are applied to the connecting web portion (14) and to at least one edge forming portion (13).

16. An article according to any preceding claim **characterised in that** at least one of the first and second edge forming portions (38.39) is hollow.

17. A method of making a masking material comprising providing a sheet (16) of polymer material, applying pressure to the sheet (16) at first and second laterally spaced positions to form first and second longitudinally extending seams (18;18') between upper and lower surfaces of the sheet (16), and applying pressure to the sheet (16) to compress partially a portion (14;14') of the sheet (16) between the first and second seams (18;18') to form a flexible web portion (14;14') of reduced thickness relative to the remaining portion of the sheet (16) between the first and second scams (18;18').

18. A method according to claim 17 **characterised in that** the sheet (16) is separable along the seams (18; 18') to form an elongate strip in which the flexible web portion (14; 14') connects first and second edge forming portions (12,13: 12',13 ').

19. A method according to claim 17 **characterised in that** adhesive (15;29;30;31a) is applied to the connecting web portion (14) between the first and second seams (18) for releasably securing the elongate strip to mask temporarily a gap between two relatively movable parts (1,2).

20. A method according to claim 19 **characterised in that** the adhesive (15;29;30;31a) is applied as a longitudinal stripe to the flexible connecting web portion (14).

21. A method according to claim 17 **characterised in that** the polymer material is a foam material or a non-woven material.

22. An apparatus for manufacturing a masking material comprising means (17; 17') for forming first and second seams (18; 18') between upper and lower surfaces of a sheet (16) of polymer material, said seams (18;18') being laterally spaced apart, and means (19;19') for partially compressing a portion of said sheet (16) between the seams (18;18') to form a flexible portion (14;14') of reduced thickness, wherein said sheet (16) is separable along said seams (18;18') to form an elongate strip having said flexible portion (14;14') joined along at least one edge to a portion (12,13;12',13') of increased thickness.

## Patentansprüche

1. Gegenstand zur Verwendung als Abdeckmaterial zum Abdecken eines Spalts (3) zwischen zwei relativ zueinander beweglichen Teilen (1, 2), aufweisend ein längliches Band (11; 32; 33; 37), das mit einem Klebstoff (15; 50; 54) versehen ist, um das Band (11; 32; 33; 37) an einen der Teile (1, 2) zu befestigen, **dadurch gekennzeichnet, dass** das Band (11; 32; 33; 37) mindestens einen ersten und einen zweiten separaten Randbildungsabschnitt (12, 13; 34, 35; 38, 39) zum Berühren jedes der beiden Teile (1, 2) aufweist, wobei ein flexibler Bahnabschnitt (14; 36; 40) den ersten und den zweiten Randbildungsabschnitt (12, 13; 34, 35; 38, 39) für eine Schwenkbewegung dergestalt miteinander verbindet, dass sich der erste und der zweite Randbildungsabschnitt (12, 13; 34, 35; 38, 39) unabhängig voneinander bewegen können, und mit Klebstoff (15; 50; 54) auf einer Seite des verbindenden Bahnabschnitts (14; 36; 40) zum Befestigen des länglichen Bandes (11; 32; 33; 37) an einen der Teile (1, 2) dergestalt, dass der eine Teil durch eine klebstofffreie Fläche des ersten Randbildungsabschnitts (12; 34; 38) berührt wird und der andere Teil durch den zweiten Randbildungsabschnitt (13; 35; 39) berührt wird.

2. Gegenstand nach Anspruch 1, **dadurch gekennzeichnet, dass** sich das Band (11; 32) so anpassen kann, dass es Spalte (3) von unterschiedlicher Größe und/oder Form ausfüllt, indem der erste und der zweite Randbildungsabschnitt (12, 13; 34, 35) eine Schwenkbewegung vollführen, um die beiden relativ zueinander beweglichen Teile (1, 2), welche den abzudeckenden Spalt (3) definieren, zu berühren.

3. Gegenstand nach Anspruch 1 oder Anspruch 2, **dadurch gekennzeichnet, dass** der Gegenstand aus einem Schaumstoffmaterial besteht.

4. Gegenstand nach Anspruch 3, **dadurch gekennzeichnet, dass** das Schaumstoffmaterial ein offen- oder geschlossenzelliger Polymerschaumstoff ist.

5. Gegenstand nach einem der vorangehenden Ansprüche, **dadurch gekennzeichnet, dass** der verbindende Bahnabschnitt (14; 36; 40) im Vergleich zu dem ersten oder dem zweiten oder beiden Randbildungsabschnitten (12, 13; 34, 35; 38, 39) eine geringere Dicke aufweist.

6. Gegenstand nach einem der vorangehenden Ansprüche, **dadurch gekennzeichnet, dass** der zweite Randbildungsabschnitt (13'; 13"; 35'; 35"; 42') über einen zweiten verbindenden Bahnabschnitt (14' 14"; 36'; 36") mit einem dritten Randbildungsabschnitt (12'; 12"; 34'; 34"; 43') verbunden ist.

7. Gegenstand nach Anspruch 6, wobei der zweite Randbildungsabschnitt (13'; 13"; 35'; 35"; 42') einen größeren Querschnitt aufweist als jeweils der erste und der dritte Randbildungsabschnitt (12'; 12"; 34'; 34"; 43').

8. Gegenstand nach einem der vorangehenden Ansprüche, **dadurch gekennzeichnet, dass** der verbindende Bahnabschnitt (14; 14'; 14") eine Breite quer zur Länge des Bandes (11; 11'; 11") aufweist und über die Breite hinweg eine gleichmäßige Dicke aufweist.

9. Gegenstand nach einem der vorangehenden Ansprüche, **dadurch gekennzeichnet, dass** der verbindende Bahnabschnitt eine glatte Oberfläche aufweist.

10. Gegenstand nach einem der Ansprüche 1 bis 8, **dadurch gekennzeichnet, dass** der verbindende Bahnabschnitt eine strukturierte Oberfläche aufweist.

11. Gegenstand nach einem der vorangehenden Ansprüche, **dadurch gekennzeichnet, dass** der Klebstoff (15) ein Haftklebstoff ist.

12. Gegenstand nach einem der vorangehenden Ansprüche, **dadurch gekennzeichnet, dass** der verbindende Bahnabschnitt (14) eine Breite quer zur Länge des Bandes aufweist und sich der Klebstoff (15) über die volle Breite des verbindenden Bahnabschnitts (14) hinweg erstreckt.

13. Gegenstand nach einem der Ansprüche 1 bis 11, **dadurch gekennzeichnet, dass** der verbindende Bahnabschnitt (14) eine Breite quer zur Länge des Bandes (11) aufweist und sich der Klebstoff (29) teilweise über die Breite des verbindenden Bahnabschnitts (14) hinweg erstreckt.

14. Gegenstand nach einem der vorangehenden Ansprüche, **dadurch gekennzeichnet, dass** ein einzelner Klebstoffstreifen (29; 30) auf den verbindenden Bahnabschnitt (14) und auf mindestens einen Randbildungsabschnitt (13) aufgebracht ist.

15. Gegenstand nach einem der Ansprüche 1 bis 13, **dadurch gekennzeichnet, dass** separate Klebstoffstreifen (31a; 31b; 31c) auf den verbindenden Bahnabschnitt (14) und auf mindestens einen Randbildungsabschnitt (13) aufgebracht sind.

16. Gegenstand nach einem der vorangehenden Ansprüche, **dadurch gekennzeichnet, dass** der erste oder der zweite oder beide Randbildungsabschnitte (38, 39) hohl sind.

17. Verfahren zum Herstellen eines Abdeckmaterials, wobei das Verfahren Folgendes aufweist: Bereitstellen einer Lage (16) eines Polymermaterials; Anlegen von Druck an die Lage (16) an einer ersten und einer zweiten seitlich voneinander beabstandeten Position, um eine erste und eine zweite sich in Längsrichtung erstreckende Naht (18; 18') zwischen einer Ober- und einer Unterseite der Lage (16) auszubilden, und Anlegen von Druck an die Lage (16), um einen Abschnitt (14; 14') der Lage (16) zwischen der ersten und der zweiten Naht (18; 18') teilweise zusammenzudrücken, um einen flexiblen Bahnabschnitt (14; 14') von geringerer Dicke im Vergleich zum übrigen Abschnitt der Lage (16) zwischen der ersten und der zweiten Naht (18; 18') auszubilden.

18. Verfahren nach Anspruch 17, **dadurch gekennzeichnet, dass** die Lage (16) entlang den Nähten (18; 18') trennbar ist, so dass ein längliches Band entsteht, bei dem der flexible Bahnabschnitt (14; 14') den ersten und den zweiten Randbildungsabschnitt (12, 13; 12', 13') miteinander verbindet.

19. Verfahren nach Anspruch 17, **dadurch gekennzeichnet, dass** Klebstoff (15; 29; 30; 31a) auf den verbindenden Bahnabschnitt (14) zwischen der ersten und der zweiten Naht (18) aufgebracht wird, um das längliche Band lösbar zu befestigen, um vorübergehend einen Spalt zwischen zwei relativ zueinander beweglichen Teilen (1, 2) abzudecken.

20. Verfahren nach Anspruch 19, **dadurch gekennzeichnet, dass** der Klebstoff (15; 29; 30; 31a) als ein länglicher Streifen auf den flexiblen verbindenden Bahnabschnitt (14) aufgebracht wird.

21. Verfahren nach Anspruch 17, **dadurch gekennzeichnet, dass** das Polymermaterial ein Schaumstoffmaterial oder ein Vliesmaterial ist.

22. Vorrichtung zum Herstellen eines Abdeckmaterials, wobei die Vorrichtung Folgendes aufweist: ein Mittel (17; 17') zum Ausbilden einer ersten und einer zweiten Naht (18; 18') zwischen einer Ober- und einer Unterseite einer Lage (16) eines Polymermaterials, wobei die Nähte (18; 18') seitlich voneinander beabstandet sind, und ein Mittel (19; 19') zum teilweisen Zusammendrücken eines Abschnitts der Lage (16) zwischen den Nähten (18; 18'), um einen flexiblen Abschnitt (14; 14') von geringerer Dicke auszubilden, wobei die Lage (16) entlang den Nähten (18; 18') trennbar ist, so dass ein längliches Band entsteht, das den flexiblen Abschnitt (14; 14') aufweist, der entlang mindestens eines Randes mit einem Abschnitt (12, 13; 12', 13') von größerer Dicke verbunden ist.

## Revendications

1. Article à utiliser comme matière de masquage pour masquer un espace (3) entre deux parties mobiles l'une par rapport à l'autre (1, 2), comprenant un bourrelet allongé (11; 32; 33; 37) revêtu d'un adhésif (15; 50; 54) pour coller le bourrelet (11; 32; 33; 37) sur l'une des parties (1, 2), **caractérisé en ce que** le bourrelet (11; 32; 33; 37) présente au moins des première et deuxième parties de formation de bord séparées (12, 13; 34, 35; 38, 39) pour entrer en contact avec chacune des deux parties (1, 2), une partie de languette flexible (14; 36; 40) reliant les première et deuxième parties de formation de bord (12, 13; 34, 35; 38, 39) pour un mouvement articulé de telle sorte que les première et deuxième parties de formation de bord (12, 13; 34, 35; 38, 39) puissent se déplacer indépendamment l'une de l'autre, et un adhésif (15; 50; 54) étant prévu sur un côté de la partie de languette de connexion (14; 36; 40) pour coller le bourrelet allongé (11; 32; 33; 37) sur une des parties (1, 2), de telle sorte que ladite partie soit en contact avec une surface dépourvue d'adhésif de la première partie de formation de bord (12; 34; 38) et que l'autre partie soit en contact avec la deuxième partie de formation de bord (13; 35; 39).

2. Article selon la revendication 1, **caractérisé en ce que** le bourrelet (11; 32) peut être adapté pour remplir des espaces (3) de taille et/ou de forme différente par un mouvement articulé des première et deuxième parties de formation de bord (12, 13; 34, 35) pour entrer en contact avec les deux parties mobiles l'une par rapport à l'autre (1, 2) définissant l'espace (3) à masquer.

3. Article selon la revendication 1 ou la revendication 2, **caractérisé en ce que** l'article est constitué d'une matière de mousse.

4. Article selon la revendication 3, **caractérisé en ce que** la matière de mousse est une mousse polymère à cellules ouvertes ou fermées.

5. Article selon l'une quelconque des revendications précédentes, **caractérisé en ce que** la partie de languette de connexion (14; 36; 40) présente une épaisseur réduite par rapport à au moins une des première et deuxième parties de formation de bord (12, 13; 34, 35; 38, 39).

6. Article selon l'une quelconque des revendications précédentes, **caractérisé en ce que** la deuxième partie de formation de bord (13'; 13"; 35'; 35"; 42') est connectée à une troisième partie de formation de bord (12'; 12"; 34'; 34"; 43') par une deuxième partie de languette de connexion (14'; 14"; 36'; 36").

7. Article selon la revendication 6, dans lequel la deuxième partie de formation de bord (13'; 13"; 35'; 35"; 42') présente une section transversale plus grande que chacune des première et troisième parties de formation de bord (12'; 12"; 34'; 34"; 43').

8. Article selon l'une quelconque des revendications précédentes, **caractérisé en ce que** la partie de languette de connexion (14; 14'; 14") présente une largeur transversale à la longueur du bourrelet (11; 11'; 11") et présente une épaisseur uniforme sur la largeur.

9. Article selon l'une quelconque des revendications précédentes, **caractérisé en ce que** la partie de languette de connexion présente une surface lisse.

10. Article selon l'une quelconque des revendications 1 à 8, **caractérisé en ce que** la partie de languette de connexion présente une surface texturée.

11. Article selon l'une quelconque des revendications précédentes, **caractérisé en ce que** l'adhésif (15) est un adhésif sensible à la pression.

12. Article selon l'une quelconque des revendications précédentes, **caractérisé en ce que** la partie de languette de connexion (14) présente une largeur transversale à la longueur du bourrelet, et l'adhésif (15) s'étend sur la totalité de la largeur de la partie de languette de connexion (14).

13. Article selon l'une quelconque des revendications 1 à 11, **caractérisé en ce que** la partie de languette de connexion (14) présente une largeur transversale à la longueur du bourrelet (11), et l'adhésif (29) s'étend partiellement sur la largeur de la partie de languette de connexion (14).

14. Article selon l'une quelconque des revendications précédentes, **caractérisé en ce qu'**une seule bande d'adhésif (29; 30) est appliquée sur la partie de languette de connexion (14) et sur au moins une partie de formation de bord (13).

15. Article selon l'une quelconque des revendications 1 à 13, **caractérisé en ce que** des bandes d'adhésif séparées (31a; 31b; 31c) sont appliquées sur la partie de languette de connexion (14) et sur au moins une partie de formation de bord (13).

16. Article selon l'une quelconque des revendications précédentes, **caractérisé en ce qu'**au moins une des première et deuxième parties de formation de bord (38, 39) est creuse.

17. Procédé pour fabriquer une matière de masquage, comprenant la fourniture d'une feuille (16) de matière polymère, l'application d'une pression sur la feuille (16) en des première et deuxième positions latéralement espacées pour former des première et deuxième soudures s'étendant de façon longitudinale (18; 18') entre des surfaces supérieure et inférieure de la feuille (16), et l'application d'une pression sur la feuille (16) pour comprimer partiellement une partie (14; 14') de la feuille (16) entre les première et deuxième soudures (18; 18') pour former une partie de languette flexible (14; 14') d'épaisseur réduite par rapport à la partie restante de la feuille (16) entre les première et deuxième soudures (18; 18').

18. Procédé selon la revendication 17, **caractérisé en ce que** la feuille (16) est séparable le long des soudures (18; 18') pour former un bourrelet allongé dans lequel la partie de languette flexible (14; 14') relie les première et deuxième parties de formation de bord (12, 13; 12', 13').

19. Procédé selon la revendication 17, **caractérisé en ce que** l'adhésif (15; 29; 30; 31a) est appliqué sur la partie de languette de connexion (14) entre les première et deuxième soudures (18) pour coller de façon détachable le bourrelet allongé pour masquer temporairement un espace entre deux parties mobiles l'une par rapport à l'autre (1, 2).

20. Procédé selon la revendication 19, **caractérisé en ce que** l'adhésif (15; 29; 30; 31a) est appliqué sous la forme d'une bande longitudinale sur la partie de languette de connexion flexible (14).

21. Procédé selon la revendication 17, **caractérisé en ce que** la matière polymère est une matière de mousse ou une matière non tissée.

22. Dispositif pour fabriquer une matière de masquage, comprenant des moyens (17; 17') pour former des première et deuxième soudures (18; 18') entre des surfaces supérieure et inférieure d'une feuille (16) de matière polymère, lesdites soudures (18; 18') étant espacées latéralement, et des moyens (19; 19') pour comprimer partiellement une partie de ladite feuille (16) entre les soudures (18; 18') pour former une partie flexible (14; 14') d'épaisseur réduite, dans lequel ladite feuille (16) est séparable le long desdites soudures (18; 18') pour former un bourrelet allongé dont ladite partie flexible (14; 14'), le long d'au moins un bord, est jointe à une partie (12, 13; 12', 13') d'épaisseur accrue.
